# EUROPEAN PATENT APPLICATION

(11) **EP 4 782 331 A1**
(43) Date of publication of application: **29.07.2026**
(21) Application number: 25305114.8
(22) Date of filing: 28.01.2025
(51) Int. Cl.: B64C 9/02, B64C 9/32

(54) **SYSTEM FOR ACTUATING A SPOILER**

(71) Applicant: Goodrich Actuation Systems SAS, 27950 Saint-Marcel (FR)
(72) Inventor: POTIER, Karl, 75014 Paris (FR); FEBVRE, Julien, Aviron, 27930 (FR); TURPIN, Jerome, Conflans sainte honorine, 78700 (FR)
(74) Representative: Casalonga

(57) **Abstract**

A system (1) for actuating a spoiler (4a-c) of an aircraft (2). The system (1) includes a spoiler (4a-c) and an actuator (8) configured to actuate the spoiler (4a-c) between a closed position and an open position. The actuator (8) includes an output member (12) connected to the spoiler (4a-c), wherein the output member (12) is configured to move between a retracted position, in which the spoiler (4a-c) is in the closed position, and an extended position, in which the spoiler (4a-c) is in the open position. The actuator (8) also includes a motor (10) configured to drive the output member (12) between the retracted position and the extended position and a biasing member (24) configured to bias the output member (12) towards the retracted position.

## Description

### Technical Field

The present disclosure relates to a system for actuating the spoiler of an aircraft. In particular, the disclosure relates to a system including an actuator having a motor for actuating a spoiler between an open and a closed position.

### Background Art

Spoilers are used in aircraft to selectively control the airflow around the aircraft. By changing the position of the spoilers, the airflow around the aircraft can be adapted in order to control the aircraft (e.g. changing its speed or its altitude). It is therefore desirable to be able to move the spoilers to the desired position quickly. Furthermore, it is generally desirable for aircraft components to be lighter and smaller.

### Summary of the Disclosure

According to the present disclosure, there is provided a system for actuating a spoiler of an aircraft, comprising:
a spoiler; and
an actuator configured to actuate the spoiler between a closed position and an open position;
wherein the actuator comprises:
   an output member connected to the spoiler;
      wherein the output member is configured to move between a retracted position, in which the spoiler is in the closed position, and an extended position, in which the spoiler is in the open position;
   a motor configured to drive the output member between the retracted position and the extended position; and
   a biasing member configured to bias the output member towards the retracted position.

Therefore, the present disclosure provides a system for selectively opening and closing a spoiler of an aircraft.

The spoiler may be any suitable and desired type. In some examples, the spoiler is located on the wing of an aircraft. The spoiler may be used to control the lift of the wing in order to control the aircraft.

In some examples, the system includes a plurality of spoilers and an actuator connected to said plurality of actuators. This may help to ensure that a plurality of spoilers can be controlled together.

The spoiler is configured to move between an open position and a closed position. In the open position, the spoiler may extend outwardly (e.g. perpendicularly) from a surface (e.g. wing) of the aircraft. In the closed position, the spoiler may be substantially recessed within a component of the aircraft, such that a (e.g. outer) surface of the spoiler is substantially level with a surface of the aircraft.

The actuator includes an output member. The output member may be any suitable and desired type. In some examples, the output member is a rod, e.g. a hollow and/or cylindrical rod. The output member may include a connector for connecting the output member to the spoiler.

The output member is configured to move between a retracted position and an extended position. The output member is configured to from the retracted position to the extended position and from the extended position to the retracted position. The movement of the output member may be relative to the actuator as a whole and/or the motor of the actuator and/or a housing of the actuator.

The movement of the output member moves the spoiler between its open position and its closed position. When the spoiler is in the retracted position, the spoiler is in the closed position. When the spoiler is in the extended position, the spoiler is in the open position.

The actuator includes a motor. The motor may be any suitable and desired type. In some examples, the motor is an electric motor. In some examples, the motor includes a rotor and a stator, wherein optionally the rotor is located inside the stator. The motor is configured to drive the output member between the retracted position and the extended position (i.e. from the retracted position to the extended position and from the extended position to the retracted position). The motor may be configured to drive the output member in any suitable and desired way.

The actuator includes a biasing member configured to bias the output member towards the retracted position. The biasing member may be any suitable and desired type. The biasing member may be configured to exert a force on the output member to bias the output member towards the retracted position. Therefore, the biasing member may help to urge the output member from the extended position to the retracted position, thereby urging the spoiler towards the closed position. In particular, the biasing member may help to provide an initial force to help to initiate movement of the output member, thereby helping to overcome the inertia of the output member and/or the motor.

In some examples, the spoiler is configured such that airflow across the spoiler generates a force that biases the spoiler towards the open position and the output member towards the extended position. For example, as the aircraft moves, the airflow around the spoiler may generate a lift that biases the spoiler towards the open position. As the spoiler is connected to the output member, this force biases the output member towards the extended position. The biasing member may be configured to at least partly counteract the force generated by the airflow across the spoiler.

In some examples, the motor and the output member are coaxial along a longitudinal axis of the actuator. The motor may have a central and/or rotational axis. The output member may have a central axis (e.g. along an axis of symmetry and/or along a longitudinal direction of the output member). The motor and the output member may be located laterally adjacent one another.

In some examples, the output member is configured to move linearly between the retracted position and the extended position. That is, the output member is configured to translate along a straight line when it moves between the retracted position and the extended position. In some examples (e.g. when the motor and the output member are coaxial along a longitudinal axis of the actuator), the output member is configured to move linearly along the longitudinal axis between the retracted position and the extended position. Thus, the output member may be configured to move in a direction perpendicularly relative to a surface (e.g. wing) of the aircraft.

In some examples, the actuator comprises a roller screw, wherein the motor is configured to drive the output member via the roller screw. A roller screw is a component configured to convert rotational movement into linear movement. In some examples, the roller screw is connected to an output of the motor (e.g. the rotor of the motor) and to the output member of the actuator. Thus, the roller screw may be configured to convert a rotational output from the motor to linear motion, thereby driving the output member linearly.

In some examples, the extended position and the retracted position are offset from one another by between 100 mm and 180 mm, optionally between 120 mm and 160 mm, optionally by approximately 140 mm.

In some examples, the actuator includes a housing. The housing may be any suitable and desired type. In some examples, the housing may be fixed relative to the motor (e.g. such that the output member is configured to move relative to the housing). The housing may substantially enclose the motor. When the output member is in the retracted position, the housing may substantially enclose the output member.

In some examples, the output member is configured to move from the retracted position to the extended position in less than 0.15 seconds. In some examples, the output member is configured to move from the extended position to the retracted position in less than 0.15 seconds. Therefore, it can be seen that the actuator of the present invention may be configured to quickly move the spoiler between its open position and its closed position.

In some examples, the motor has a weight of less than 5 kg, optionally less than 4 kg, optionally approximately 3 kg. In some examples, the power output of the motor is less than 20 kW, optionally less than 15 kW, optionally approximately 12 kW.

In some examples, the spring has a mass of between 0.5 kg and 1.5 kg, in some examples approximately 1 kg.

In some examples, the output member is configured to move to (e.g. through) a neutral position;
wherein, when the output member is in the neutral position, the biasing member is arranged to exert substantially no force on the output member.

The neutral position may be in any suitable and desired location. In some examples, the neutral position is the same as the retracted position. In some examples, the (effective or theoretical) neutral position may be outside of the travel of the output member between the retracted position and the extended position, such that the output member does not pass through the neutral position.

Thus, in some examples, the biasing member is configured to bias the output member towards the retracted position along all of the travel of the output member between the extended position and the retracted position (and vice versa).

In some examples, the neutral position is located between the retracted position and the extended position. In some examples, the neutral position it at the midpoint between the retracted position and the extended position. The output member may move through the neutral position as it moves between the retracted position and the extended position.

When the output member is in the neutral position, the biasing member does not exert substantially any (biasing) force on the output member. That is, when the output member is in the neutral position, the biasing member substantially does not bias or urge the output member away from the neutral position.

In some examples, (when the biasing member is not in the neutral position) the biasing member is configured to bias the output member towards the neutral position. In some examples, the neutral position is the same as the retracted position. Therefore, the biasing member may be configured to bias the output member towards the retracted position, e.g. at all points between the extended position and the retracted position (and vice versa).

In some examples, the neutral position is located between the retracted position and the extended position. Therefore, when the output member is in the retracted position, the biasing member biases the output member towards the neutral position and therefore also towards the extended position. Similarly, when the output member is in the extended position, the biasing member biases the output member towards the neutral position and therefore also towards the retracted position. Therefore, by biasing the output member towards the neutral position, the biasing member helps the output member move in both directions between the retracted position and the extended position. In particular, the biasing member may help to provide an initial force to help to initiate movement of the output member, thereby helping to overcome the inertia of the output member and/or the motor.

In some examples, the biasing member is configured such that the biasing force it exerts on the output member (towards the retracted position) increases as the output member moves towards the extended position, e.g. the biasing force is proportional to the displacement of the output member (e.g. from the retracted or neutral position). In some examples, the biasing member is configured such that the biasing force it exerts on the output member (towards the extended position) increases as the output member moves from the neutral position towards the retracted position, e.g. the biasing force is proportional to the displacement of the output member (e.g. from the neutral position)

In some examples, the biasing member is a spring. The spring may be any suitable and desired type. In some examples, the spring may have a length of between 180 mm and 220 mm. In some examples, the spring has between 5 and 10 turns. In some examples, the spring has a spring constant between 90 kN/m and 420 kN/m. In some examples, the spring is configured to store between 400 J and 1100 J of energy.

In some examples, the spring has a circular cross-section. In some examples, the spring has a rectangular cross-section. Springs with rectangular cross-sections may help to provide a good compromise between the amount of deflection experienced by the spring, the stiffness of the spring, the mechanical strength of the spring and the energy storage capacity of the spring.

In some examples, the spring has an equilibrium length at which it exerts substantially no force on the output member;
wherein, when the output member is in the extended position, the spring is compressed relative to its equilibrium length.

The equilibrium length of the spring is when the spring is neither compressed nor stretched (e.g. the spring is at rest). When the spring is compressed or stretched, it may exert a biasing force, in order to return to its equilibrium length. Therefore, when the output member is in the extended position and the spring is compressed relative to its equilibrium length, the spring may bias the output member towards the location of its equilibrium length.

In some examples, when the output member is in the retracted position, the spring is stretched relative to its equilibrium length. Therefore, the spring may bias the output member towards the equilibrium length.

In some examples, the output member is configured to move to a neutral position;
wherein the spring has an equilibrium length at which it exerts substantially no force on the output member; and
wherein, when the output member is in the neutral position, the spring is at its equilibrium length.

When the equilibrium length of the spring is at the neutral position, the spring may be configured to bias the output member towards the neutral position.

In some examples, the spring is configured such that it does not occupy its equilibrium length at any point of the output member moving between the retracted position and the extended position. Thus, in some examples, the spring is configured to bias the output member towards the retracted position along all of the travel of the output member between the extended position and the retracted position (and vice versa). Thus, for example, the spring may always be under compression (when the output member is between the extended position and the retracted position (and vice versa)) or the spring may always be under extension (when the output member is between the extended position and the retracted position (and vice versa)).

In some examples, the output member is configured to stretch the spring as the output member moves from the extended position to the retracted position. In some examples, the output member is configured to compress the spring as the output member moves from the retracted position to the extended position. The output member may be configured to compress the spring in any suitable and desired way. In some examples, the output member comprises a surface that presses on the spring in order to compress the spring.

As the spring moves from the retracted position to the extended position, the output member may perform work on the spring. The spring may store the energy (e.g. as potential energy). The spring may (e.g. at a later time) convert the stored energy to perform work on the output member (e.g. to move the output member from the extended position to the retracted position.

In some examples, the actuator comprises a housing;
wherein the housing is fixed relative to the motor; and
wherein a first end of the spring is connected to the housing and a second end of the spring is connected to the output rod.

The spring may be connected to the housing and/or the output rod in any suitable and desired way. The spring being connected to both the housing and the output rod may help to ensure that the output rod is configured to move relative to the housing.

In some examples, the spring is configured to prevent the output member from moving beyond the extended position. For example, the spring may be fully compressed (e.g. at its minimum length) when the output member is in the extended position. This may help to improve the stability of the spoiler in the open position.

In some examples, the (e.g. housing of the) actuator comprises a (e.g. mechanical) stop arranged to prevent the output member from moving beyond the extended position. In some examples, the (e.g. housing of the) actuator comprises a (e.g. mechanical) stop arranged to prevent the output member from moving beyond the retracted position.

In some examples, the output member at least partly defines an enclosed volume;
wherein the enclosed volume contains a pressurised gas; and
wherein the pressurised gas is the biasing member.

The (e.g. actuator and the) output member may be configured to define an enclosed volume in any suitable and desired way. In some examples, the output member includes a chamber having an aperture, wherein (e.g. the actuator comprises) a fixed member (that) extends through the aperture, thereby sealing the aperture. The chamber of the output member and the fixed member together define the enclosed volume. The output member may be configured to move relative to the fixed member such that the size of the enclosed volume may be varied (e.g. as the output member moves between the retracted position and the extended position). In some examples, the chamber of the output member and the fixed member may be configured to function as a piston.

As the gas is under pressure, it may be configured to exert a biasing force on the output member (e.g. towards a position in which the pressure of the gas is lower).

In some examples, the pressurised gas is (pressurised) nitrogen. In some examples, the pressurised gas has an equivalent spring constant of between 100 kN/m and 150 kN/m, optionally approximately 125 kN/m. In some examples, the pressurised gas is configured to store between 400 J and 600 J of energy, optionally approximately 500 J of energy.

In some examples, when the output member is in the retracted position, the pressurised gas is under a first pressure; and
when the output member is in the extended position, the pressurised gas is under a second pressure;
wherein the second pressure is higher than the first pressure.

As the pressure of the gas is lower in the retracted position, the pressurised gas may be configured to bias the output member towards the retracted position. The pressure of the gas in the retracted position may be above atmospheric pressure, such that the pressurised gas may be configured to bias the output member towards the retracted position, e.g. at all points between the extended position and the retracted position.

In some examples, the pressure of the gas is varied by varying the size of the enclosed volume defined by the output member. For example, as the output member moves from the retracted position to the extended position, the size of the enclosed volume may decrease, thereby increasing the pressure exerted on the gas.

In some examples, the output member is configured to compress the pressurised gas as the output member moves from the retracted position to the extended position.

In some examples, when the output member is in the retracted position, the pressurised gas is under a pressure of between 50 MPa and 60 MPa, optionally approximately 55 MPa. In some examples, when the output member is in the extended position, the pressurised gas is under a pressure of 60 MPa to 80 MPa, optionally approximately 70 MPa.

In some examples, when the output member is in the retracted position, the pressurised gas is under a first pressure; and
when the output member is in the extended position, the pressurised gas is under a second pressure;
wherein the first pressure is higher than the second pressure.

As the pressure of the gas is higher in the retracted position, the pressurised gas may be configured to bias the output member towards the extended position.

In some examples, the pressure of the gas is varied by varying the size of the enclosed volume defined by the output member. For example, as the output member moves from the retracted position to the extended position, the size of the enclosed volume may increase, thereby decreasing the pressure exerted on the gas.

In some examples, the output member is configured to compress the pressurised gas as the output member moves from the extended position to the retracted position.

In some examples, when the output member is in the extended position, the pressurised gas is under a pressure of between 50 MPa and 60 MPa, optionally approximately 55 MPa. In some examples, when the output member is in the retracted position, the pressurised gas is under a pressure of 60 MPa to 80 MPa, optionally approximately 70 MPa.

### Brief Description of the Drawings

Certain examples of the present disclosure will now be described with reference to the accompanying drawings in which:
Figure 1 is a perspective view of an aircraft with a pair of spoilers;
Figures 2a and 2b are perspective views of spoilers in the open position and the closed position;
Figures 3a and 3b are cross-sectional views of an actuator for a spoiler system;
Figure 4a and 4b are schematic views of springs;
Figures 5a and 5b are cross-sectional views of an actuator for a spoiler system;
Figure 6 is a schematic view of a system for actuating a spoiler of an aircraft; and
Figures 7a-d are plots showing the movement of the output member over time.

### Detailed Description

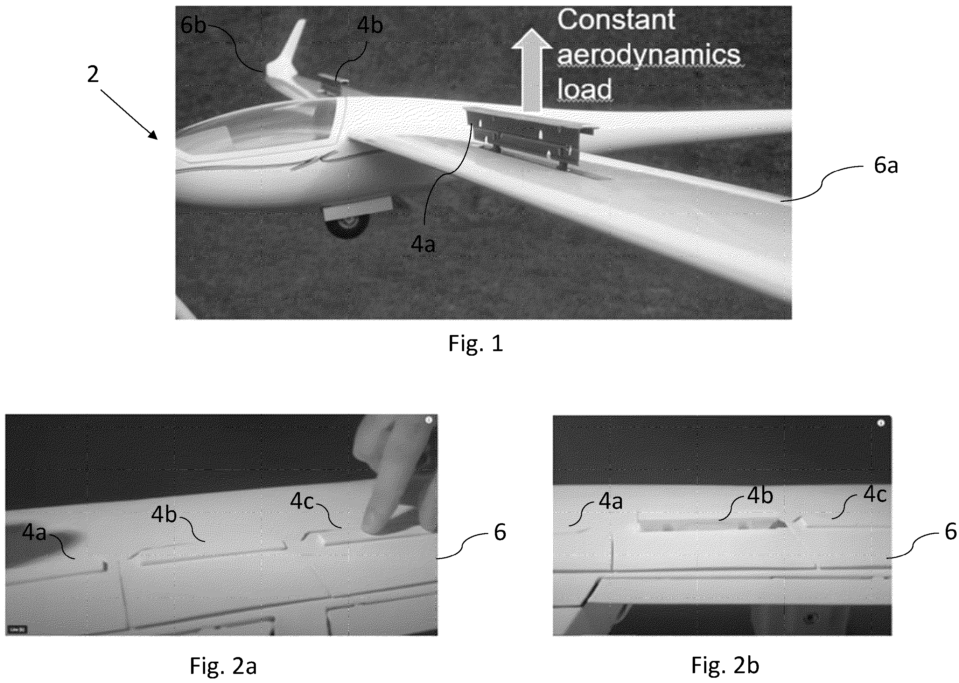

Figure 1 is a perspective view of an aircraft 2 with a pair of spoilers 4a, 4b. The spoilers 4a, 4b are each located on a wing 6a, 6b of the aircraft 2. The spoilers 4a, 4b are configured to be actuated between a closed position (e.g. as shown in Figure 2a) and an open position (e.g. as shown in Figures 1 and 2b).

The spoilers 4a, 4b (e.g. in the open position) each extend perpendicularly from a top surface of a wing 6a, 6b of the aircraft 2. In the open position, the spoilers 4a, 4b are configured to disrupt (e.g. reduce) the lift of the wing 6a, 6b to help to control the aircraft 2 (e.g. by changing its speed or altitude). In the closed position, the spoilers 4a, 4b are substantially flush with the wing 6a, 6b of the aircraft 2, such that they substantially do not affect the flow of air.

Figures 2a and 2b are perspective views of spoilers 4a-c in the open and closed positions. In this example, the wing 6 of the aircraft includes a plurality of spoilers 4a-c located laterally adjacent to one another.

Figure 2a shows three spoilers 4a-c in the closed position. In the closed position, the spoilers 4a-c are substantially recessed in the wing 6 (e.g. such that the top surface of each of the spoilers 4a-c are substantially level with the top surface of the wing 6 of the aircraft). In the closed position, the spoilers 4a-c do not substantially affect the airflow around the wing 6 of the aircraft.

Figure 2b shows two spoilers 4a, 4c in the closed position and one spoiler 4b in the open position. In the open position, the spoiler 4b extends perpendicularly from the top surface of the wing 6 (e.g. such that the top surface of the spoiler 4b is located away from (spaced above) the top surface of the wing 6 of the aircraft). In the open position, the spoilers 4b is configured to affect (e.g. disrupt or modify) the airflow around the wing 6 of the aircraft.

Airflow across the wings 6 and the spoilers 4a-c generates a force that biases the spoilers 4a-c towards the open position, e.g. owing to the cross-sectional shape of the spoilers 4a-c. However, it is desirable to actuate the spoilers from the closed position to the open position and from the open position to the closed position as quickly as possible and in a controlled manner, to help ensure that the airflow around the wing can be quickly adapted as desired.

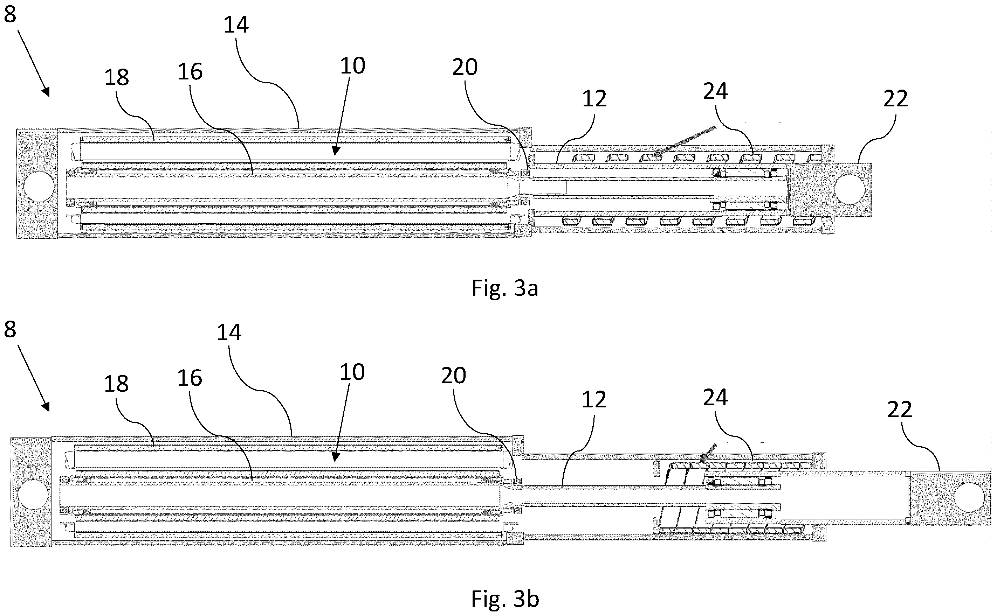

Figures 3a and 3b are cross-sectional views of an actuator 8 for a spoiler system. The actuator 8 includes an electric motor 10 and an output member 12. The motor 10 and the output member 12 are located in a housing 14. The motor 10 and the output member 12 are located laterally adjacent one another and are coaxial along a longitudinal axis of the actuator 8.

The motor 10 includes a rotor 16 and a stator 18. The rotor 16 of the motor 10 is connected to the output member 12 by a roller screw 20. The roller screw 20 is configured to convert the rotational output of the rotor 16 of the motor 10 into linear motion to drive the output member 12. It will be understood that any other similar component capable of converting rotational motion into linear motion may be used.

The output member 12 has a connector 22 for connecting the actuator 8 to a spoiler (e.g. a spoiler 4a-c as shown in Figures 1, 2a and 2b). In some examples, the output member 12 may be connected to a plurality of spoilers.

The actuator 8 further includes a spring 24. The spring 24 is a biasing member. The spring 24 is connected to the output member 12 and the housing 14. The spring 24 is configured to bias the output member 12 towards certain positions relative to the motor 10 and the housing 14, by exerting a force on the output member 12.

Figure 3a shows the output member 12 in the retracted position. When the actuator 8 is connected to a spoiler and the output member 12 is in the retracted position, the spoiler is in the closed position.

Figure 3b shows the output member 12 in the extended position. When the actuator 8 is connected to a spoiler and the output member 12 is in the extended position, the spoiler is in the open position.

It can be seen that the output member 12 is configured to move linearly between the retracted position and the extended position, so to actuate the spoiler between the closed position and the open position respectively. The output member 12 moves linearly along the longitudinal axis of the actuator 8 (the longitudinal axis passing through the centre of the actuator, with the various motor components (e.g. stator 18, rotor 16, spring 24, housing 14, output member 12 arranged coaxially about the longitudinal axis)).

It can be seen in Figure 3a that, when the output member 12 is in the retracted position, the spring 24 is at its equilibrium length or is slightly compressed relative to its equilibrium length. Therefore, the spring 24 will not exert a biasing force on the output member 12 (and therefore the output member 12 will not bias the spoiler away from the closed position) or the spring 24 will exert a small biasing force on the output member 12 (and therefore the output member 12 will slightly bias the spoiler away from the closed position).

It can be seen in Figure 3b that, when the output member 12 is in the extended position, the spring 24 is compressed relative to its equilibrium length. Therefore, the spring 24 will bias the output member 12 towards the neutral position, where the spring 24 is at its equilibrium length. In this example, the actuator 8 is configured such that the neutral position is located between at the retracted position. Therefore, when the output member 12 is in the extended position, the spring 24 biases the output member 12 towards the retracted position (and the spoiler towards its closed position).

Therefore, the spring 24 is configured, together with the motor 10, to help actuate the spoilers from the closed position to the open position and from the open position to the closed position more quickly.

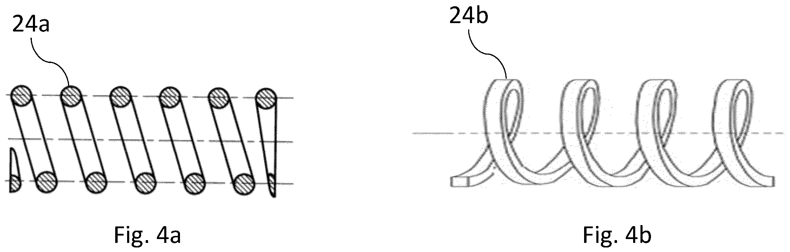

Figure 4a and 4b are schematic views of springs 24a, 24b (e.g. to be used as the spring in the actuator shown in Figures 3a and 3b). The springs 24a, 24b of Figures 4a and 4b are biasing members. The spring 24a of Figure 4a has a circular cross section and the spring 24b of Figure 4b has a rectangular cross section. Springs 24b with a rectangular cross-section may help to improve the performance of the actuator 8. For example, springs 24b with a rectangular cross-section may help to provide a good compromise between the amount of deflection experienced by the spring, the stiffness of the spring, the mechanical strength of the spring and the energy storage capacity of the spring.

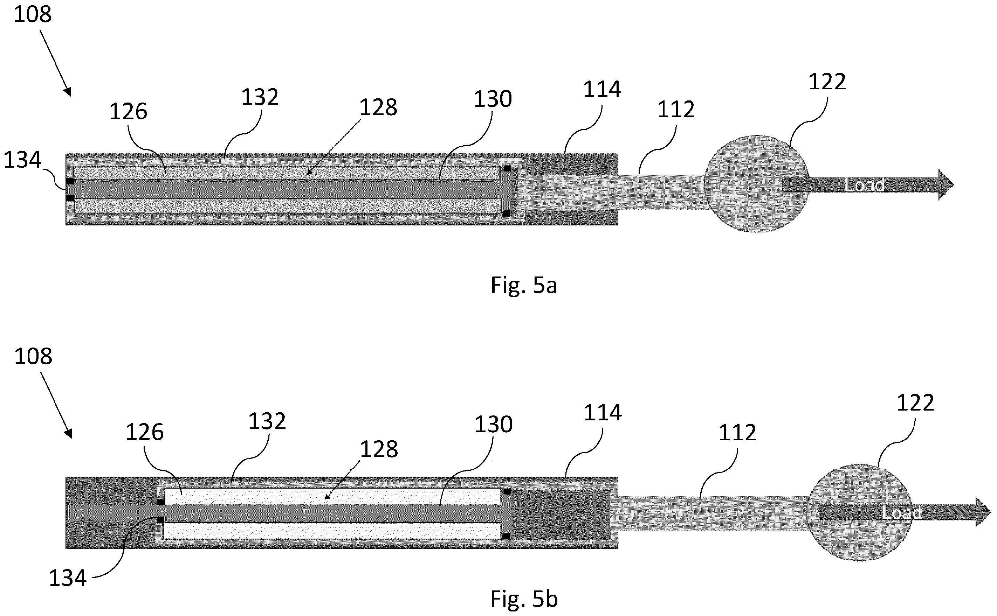

Figures 5a and 5b are cross-sectional views of an actuator 108 for a spoiler system. In this example, only the output member 112 of the actuator 108 is shown. However, it will be understood that the actuator 108 may include any of the parts discussed in relation to Figures 3a and 3b. For example, the actuator 108 may include a motor (including a rotor and a stator) and a roller screw configured to drive the output member 112.

The output member 112 has a connector 122 for connecting the actuator 108 to a spoiler (not shown). In some examples, the output member 112 may be connected to a plurality of spoilers.

The actuator 108 includes a pressurised gas 126. The pressurised gas 126 is a biasing member. The pressurised gas 126 is contained in an enclosed volume 128 of the actuator 108. The enclosed volume 128 is defined by the output member 112 and the fixed member 130. In particular, the enclosed volume 128 is an interior volume defined by the cylindrical surface 132 of the output member 112 and the fixed member 130. The fixed member 130 is stationary relative to the housing 114 of the actuator 108. The fixed member 130 extends through an aperture 134 in the cylindrical surface 132 of the output member 112.

The pressurised gas 126 is configured to bias the output member 112 towards certain positions relative to the housing 114 of the actuator 108, by exerting a force on the output member 112.

Figure 5a shows the output member 112 in the retracted position. When the actuator 108 is connected to a spoiler and the output member 112 is in the retracted position, the spoiler is in the closed position.

Figure 5b shows the output member 112 in the extended position. When the actuator 108 is connected to a spoiler and the output member 112 is in the extended position, the spoiler is in the open position.

It can be seen by comparing Figures 5a and 5b that, when the output member 112 moves from the retracted position to the extended position, the enclosed volume 128 reduces in size owing to the movement of the cylindrical surface 132 relative to the fixed member 130. As the amount of pressurised gas 126 contained in the enclosed volume 128 is substantially constant, the pressurised gas 126 is under higher pressure when the output member 112 is in the extended position. When the output member 112 is in the extended position, the pressurised gas 126 biases the output member 112 towards the retracted position.

Therefore, the pressurised gas 126 is configured, together with the motor (not shown), to help actuate the spoilers from the open position to the closed position.

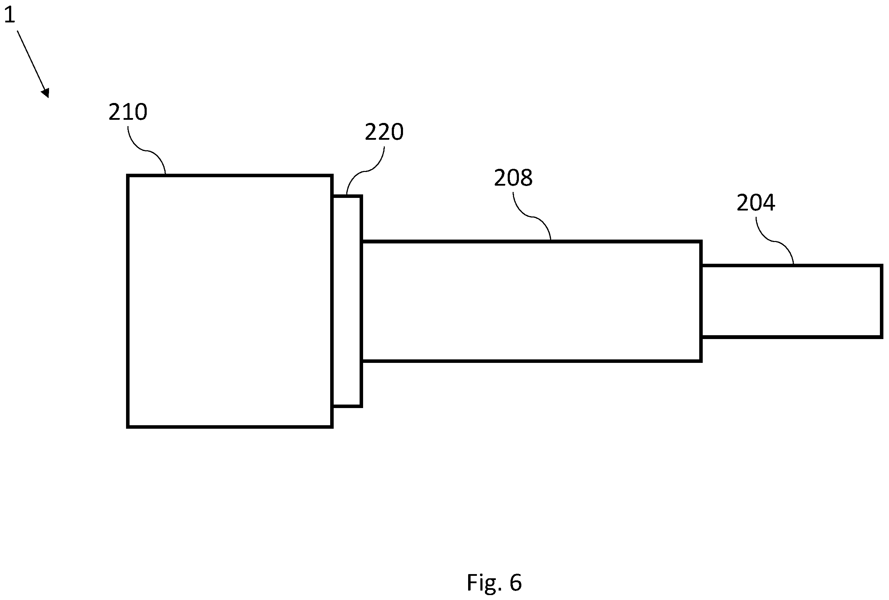

Figure 6 is a schematic view of a system 1 for actuating a spoiler 204 of an aircraft. The system 1 includes a motor 210, an actuator 208 and a spoiler 204. The motor 210 is configured to drive the actuator 208. The actuator 208 is configured to actuate the spoiler 204. The motor 210, the actuator 208 and the spoiler 204 may have any of the features discussed herein.

In this example, the system 1 further includes a roller screw 220. The motor 210 is configured to drive actuator 208 via the roller screw. The roller screw 220 may have any of the features discussed herein.

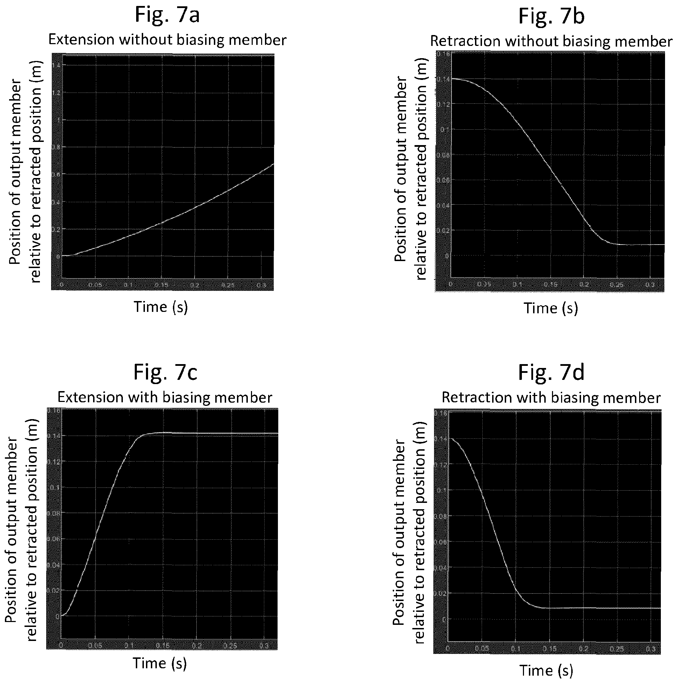

Figures 7a-d are plots showing the movement of the output member over time. In each of Figures 7a-d, the x-axis represents the time in seconds and the y-axis represents the position of the output member relative to the retracted position of the output member in metres.

Figure 7a shows an output member without a biasing member (i.e. a conventional actuator) being moved from the retracted position to the extended position. Figure 7c shows an output member of the present disclosure being moved from the extended position to the retracted position. In this example, the extended position is at 0.14 metres. It can be seen that the output member of Figure 7c reaches the fully extended state in approximately 0.13 seconds, whereas the output member of Figure 7a does not reach the fully extended position within the timeframe shown in the plot (approximately 0.3 seconds). Therefore, it can be seen that the output member of Figure 7c reaches the fully extended state much more quickly than the output member of Figure 7a.

Figure 7b shows an output member without a biasing member (i.e. a conventional actuator) being moved from the extended position to the retracted position. Figure 7d shows an output member of the present disclosure being moved from the extended position to the retracted position. As above, the extended position is at 0.14 metres. It can be seen that the output member of Figure 7d returns to the retracted position in approximately 0.13 seconds, whereas the output member of Figure 7b takes approximately 0.25 seconds. Therefore, it can be seen that the output member of Figure 7d returns to the retracted position much more quickly than the output member of Figure 7b.

Therefore, the present disclosure may provide a system for quickly actuating a spoiler. This may advantageously provide for more responsive control of the aircraft.

The biasing member may act together with the motor and the forces exerted by airflow around the output member to help actuate the spoiler. The biasing member may help to bias the output member towards one or more positions, the motor may be required to exert less force than in a system without a biasing member. In particular, the biasing member may help to provide an initial force to help to initiate movement of the output member, thereby helping to overcome the inertia of the output member and/or the motor.

As the motor may be required to exert less force, this may allow the motor to be smaller (e.g. having a shorter length and/or smaller diameter) than in a system without a biasing member. This may also result in the motor having lower inertia. This may help to further increase the speed at which the spoiler is actuated.

Furthermore, as the actuator may be actuated quickly between the open position and the closed position, this may help to minimise the time during which the spoiler is in between these states. This may help to provide for more accurate and/or more precise control of the aircraft.

## Claims

1. A system for actuating a spoiler of an aircraft, comprising:
a spoiler; and
an actuator configured to actuate the spoiler between a closed position and an open position;
wherein the actuator comprises:
an output member connected to the spoiler;
wherein the output member is configured to move between a retracted position, in which the spoiler is in the closed position, and an extended position, in which the spoiler is in the open position;
a motor configured to drive the output member between the retracted position and the extended position; and
a biasing member configured to bias the output member towards the retracted position.

2. A system as claimed in claim 1, wherein the spoiler is configured such that airflow across the spoiler generates a force that biases the spoiler towards the open position and the output member towards the extended position.

3. A system as claimed in claim 1 or 2, wherein the motor and the output member are coaxial along a longitudinal axis of the actuator.

4. A system as claimed in claim 1, 2 or 3, wherein the output member is configured to move linearly between the retracted position and the extended position.

5. A system as claimed in any preceding claim, wherein the actuator comprises a roller screw;
wherein the motor is configured to drive the output member via the roller screw.

6. A system as claimed in any preceding claim, wherein the output member is configured to move to a neutral position;
wherein, when the output member is in the neutral position, the biasing member does not exert any force on the output member.

7. A system as claimed in claim 6, wherein the biasing member is configured to bias the output member towards the neutral position.

8. A system as claimed in any preceding claim, wherein the biasing member is a spring, optionally having a rectangular cross-section.

9. A system as claimed in claim 8, wherein the spring has an equilibrium length at which it exerts no force on the output member;
wherein, when the output member is in the extended position, the spring is compressed relative to its equilibrium length.

10. A system as claimed in claim 8 or 9, wherein the output member is configured to move to a neutral position;
wherein the spring has an equilibrium length at which it exerts no force on the output member; and
wherein, when the output member is in the neutral position, the spring is at its equilibrium length.

11. A system as claimed in claim 8, 9 or 10, wherein the output member is configured to compress the spring as the output member moves from the retracted position to the extended position.

12. A system as claimed in any of claimed 8 to 11, wherein the actuator comprises a housing;
wherein the housing is fixed relative to the motor; and
wherein a first end of the spring is connected to the housing and a second end of the spring is connected to the output rod.

13. A system as claimed in any of claims 1 to 5, wherein the output member at least partly defines an enclosed volume;
wherein the enclosed volume contains a pressurised gas; and
wherein the pressurised gas is the biasing member.

14. A system as claimed in claim 13, wherein, when the output member is in the retracted position, the pressurised gas is under a first pressure; and
when the output member is in the extended position, the pressurised gas is under a second pressure;
wherein the second pressure is higher than the first pressure.

15. A system as claimed in claim 13 or 14, wherein the output member is configured to compress the pressurised gas as the output member moves from the retracted position to the extended position.
